# EUROPEAN PATENT APPLICATION

(11) **EP 1 808 635 A2**
(43) Date of publication of application: **18.07.2007**
(21) Application number: 07250146.3
(22) Date of filing: 16.01.2007
(51) Int. Cl.: F16M 11/08, F16M 11/18

(54) **Display rotation apparatus**

(30) Priority: 16.01.2006 KR 20060004475
(71) Applicant: Samsung Electro-Mechanics Co., Ltd, Yeongtong-gu Suwon-si Gyeonggi-do 443-743 (KR)
(72) Inventor: Choi, Dong-Won 103-904 Woncheon Jugong 1 danji, Yeongtong-gu, Gyeonggi-do 443-755 (KR); Lee, Chil-Sung, Suwon-si, Gyeonggi-do 441-758 (KR); Kim, Jae-Kyung, Gyeonggi-do 426-150 (KR); Woo, Sang-Min, Suwon-si, Gyeonggi-do 443-370 (KR); Park,Kyoung-Shin 208-604 Woncheon Jugong 2 danji, Yeongtong-gu Suwon-si, Gyeonggi-do 443-756 (KR)
(74) Representative: Mounteney, Simon James

(57) **Abstract**

A motor (43) has a swivel hinge (45) preventing the damage of a deceleration gear and a rotor of the motor. A display rotation apparatus comprises a stand (31), a swivel hinge (45) having one end fixed to the stand (31) and configured to rotate relatively when a predetermined amount of torque is applied. A motor (43) is joined to the other end of the swivel hinge (45) by a shaft and has a deceleration gear. A guide (39) is configured to rotate as a single body with the motor (43) and is joined to a display. The restrictive torque of the swivel hinge (45) is smaller than the constraint force of the deceleration gear and greater than the weight of the display.

## Description

### BACKGROUND

### 1. Technical Field

The present invention relates to a display rotation apparatus comprising a motor and a motor assembly.

### 2. Description of the Related Art

As the size and weight of displays such as computer monitors and televisions have increased, display rotation apparatus has become widely used. The rotation apparatus uses a motor and can orientate a display toward a user.

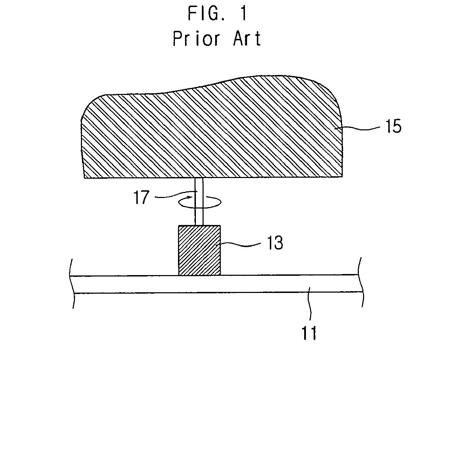

Fig. 1 is a schematic diagram of a conventional display apparatus. Referring to Fig. 1, the conventional rotation apparatus includes a stand 11 fixed to a floor and a motor 13 having one end fixed to the stand 11 and the other end joined to a display 15. The motor 13 is joined to an external apparatus and enables the user to control the position of the display using a remote controller and so on. The motor 13 has deceleration gears in its interior because the display is relatively heavy and must be rotated slowly.

Though the rotation apparatus uses a power supply to drive the motor 13, it is necessary for the user rotate the display manually when there is no power supply to the rotation apparatus. If the display 15 is rotated manually, the shaft 17 connecting the display 15 and the motor 13 is also rotated, which can cause damage to the deceleration gear and the rotor of the motor 13.

### SUMMARY

The present invention seeks to provide a display rotation apparatus capable of avoiding damage to the deceleration gear and the rotor of its motor, and a motor assembly for the same.

In one aspect, the invention features a display rotation apparatus, which comprises a stand, a swivel hinge having one end fixed to the stand and configured to rotate relatively when a predetermined amount of torque is applied, a motor joined to the other end of the swivel hinge by a shaft and having a deceleration gear, and a guide configured to rotates as a single body with the motor and joined to a display, wherein the restrictive torque of the swivel hinge is smaller than the constraint force of the deceleration gear and greater than the weigh of the display.

Embodiments may include one or more of the following features. For example, the swivel hinge has a first rotation part and a second rotation part configured to rotate relatively and a friction part interposed between the first rotation part and the second rotation part, the stand has an insertion hole into which the first rotation part is inserted and fixed, and the shaft is connected to the second rotation part.

The stand can have a rotation hole having a rotation angle in the center of the insertion hole, and a fixing member is inserted into the rotation hole and fixed to the guide. A bearing can be interposed between the guide and the stand and/or between the stand and the fixing member.

In one aspect, the invention features a display rotation apparatus, which comprises a stand, a motor having one end fixed to the stand and having a deceleration gear, a swivel hinge joined to the shaft of the motor and configured to rotate relatively when a predetermined amount of torque is applied, and a guide joined to the swivel hinge and configured to rotate simultaneously with a display, wherein the restrictive torque of the swivel hinge is smaller than the constraint force of the deceleration gear and greater than the weigh of the display.

Embodiments may include one or more of the following features. For example, guide can have a fixing groove into which the swivel hinge is inserted and fixed, and the stand has a motor fixing groove into which the motor is inserted and fixed. The stand has a rotation hole having a rotation angle in the center of the insertion hole, and a fixing member is inserted into the rotational hole and fixed to the guide. A bearing can be interposed between the guide and the stand and/or between the stand and the fixing member.

In one aspect, the invention features a motor assembly, which comprises a swivel hinge configured to rotate relatively when a predetermined amount of torque is applied, and a motor joined with one end of the swivel hinge by a shaft and having a deceleration gear, wherein the restrictive torque of the swivel hinge is smaller than the constraint force of the deceleration gear.

And the swivel hinge has a first rotational part fixed to the axis of the deceleration gear and configured to rotate simultaneously, a second rotation part inserted rotatably into the first rotation part, a friction part interposed between the first rotation part and the second rotation part, and a pressure part inserted into the first rotation part and configured to press the second rotation part toward the friction part.

### BRIEF DESCRIPTION OF THE DRAWINGS

Fig. 1 is a schematic diagram of a conventional display rotation apparatus.
Fig. 2 is a cross sectional view of a display rotation apparatus in accordance with a first embodiment of the invention.
Fig. 3 is a plan view of a fixing member inserted into a stand in accordance with the first embodiment of the invention.
Fig. 4a is a schematic diagram of the display and motor rotating, when the rotation apparatus presented in Fig. 2 rotates automatically.
Fig. 4b is a schematic diagram of the display, motor and swivel hinge rotating when the rotation apparatus presented in Fig. 2 rotates automatically.
Fig. 5 is a cross sectional view of another embodiment of a display rotation apparatus in accordance with the invention.
Fig. 6a is a schematic diagram of the display, swivel hinge and motor rotating when the rotation apparatus presented in Fig. 5 is rotated automatically.
Fig. 6b is a schematic diagram of the display rotating when the rotation apparatus present in Fig. 5 is rotated manually.
Fig. 7 is a schematic diagram of the motor assembly of the first embodiment of the present invention.

### DETAILED DESCRIPTION

Hereinafter embodiments of a display rotation apparatus according to the present invention will be described in more detail by way of example and with reference to the accompanying drawings.

In the description with reference to the accompanying drawings, those components are rendered the same reference number that are the same or are in correspondence regardless of the figure number, and redundant explanations are omitted. Also, the basic principles will first be described before discussing the preferred embodiments of the invention.

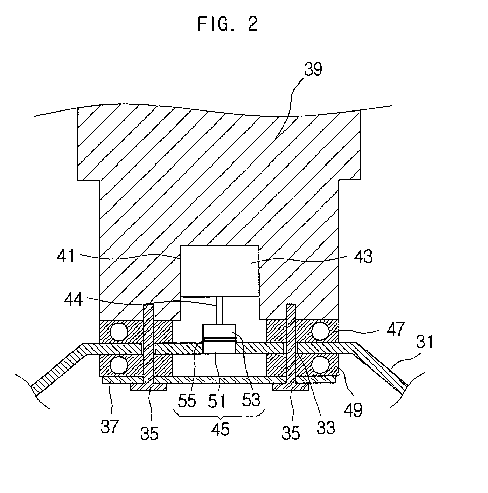

Referring to Fig. 2, a display rotation apparatus in accordance with a first embodiment comprises guide 39 to provide the display (unseen) with a turning effect, a motor 43 fixed to the guide 39 and configured to provide the guide 39 with a driving force when rotated automatically, a stand 31 fixed to a floor and fixing members 35 inserted into the stand 31 and joined to the guide 39. A bearing 47, 49 is interposed between the guide 39 and the stand 31 or the guide 39 and a bracket 37. A swivel hinge 45 is inserted and connected to the motor 43.

The display rotation apparatus in accordance with the present invention is characterized in having swivel hinge 45 preventing the damage of the rotor of the motor and a deceleration gear when rotated manually. In other words, if the rotation apparatus is rotated manually, the guide 39, fixing members 35, the bracket 37 and motor 43 are configured to rotate as a single body, and slip occurs between a first rotation part 51 and a second rotation part 53 of the swivel hinge 45 as the second rotation part 53 is rotated. At the same time the deceleration gear and rotor of the motor are not rotated. On the other hand, the rotation apparatus is rotated automatically by the driving force of the motor 43, the swivel hinge 45 doesn't rotate and only the guide 39, the fixing member 35, the bracket 37 and the motor 43 are rotated. Consequently, when the rotation apparatus of a display is rotated manually the deceleration gear, not illustrated, doesn't rotate, so the damage of the deceleration gear and rotor is prevented.

The guide 39, as illustrated in Fig. 2, is rotated with the motor 43, the bracket 37 and fixing members 35 at the time of automatic rotation by the driving force of the motor 43. The guide 39 is rotated with the motor 43, bracket 37, swivel hinge 45 and fixing members 35 at the time of manual rotation by the a user. A display, not illustrated, such as television or monitor is positioned at the guide 39 and the direction of the display is determined by the rotation of the guide 39.

A motor insertion hole 41 is formed at the center of the guide 39. The motor 43 is inserted into the insertion hole 41 and configured to rotate with the guide 39 as a single body. The motor insertion hole 41 is the center of the rotation of the display and guide 39. The fixing members 35 are fixed relative to the motor insertion hole. Accordingly guide 39 is rotated with the fixing members 35 at the time of the manual rotation as well as the automatic rotation.

An upper bearing 47 is interposed between the guide 39 and the stand 31 and configured to make the rotation of the guide smooth.

The guide 39 can be shaped as a circular plate or rectangular plate or any other suitable shape. In particular, the guide can be formed with the display as single body in accordance with design specifications.

The stand 31 is fixed to a floor or a wall and configured to support the rotation apparatus of a display. An insertion hole 32 is formed in the center of the stand 31 and the swivel hinge 45 is inserted and fixed to the insertion hole 32. The insertion hole 32 is in connection with the insertion hole of the guide 39, and the insertion hole 32 of the stand 31 and the motor insertion hole 41 are the center of the rotation apparatus of a display.

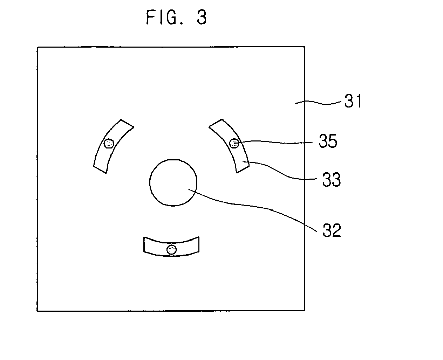

Along the circumference of the insertion hole 32, as illustrated in Fig. 3, arcuate rotation holes 33 are formed. The rotation holes 33 have the same arc. Fixing members 35 are inserted through respective ones of the rotation holes 33. Fixing members 35 rotate with the guide 39 as a single body and are guided by the rotation holes 33. The angle that the fixing members 35 and guide 39 can rotate is determined by the arc.

The motor 43 is inserted and fixed to the insertion hole 41 of the guide 39 and configured to rotate as a unit by with the guide 39. The motor 43 has a shaft 44 joined to the swivel hinge 45 and configured to provide a turning effect. The motor 43 has a deceleration gear (unseen) to decrease the speed of revolution of the display and to increase the torque. The deceleration gear comprises a gear train to decrease the high speed of the turning effect caused by the motor 43 and to get the greater torque.

The motor 43 has a predetermined amount of drive torque. The drive torque of the motor 43 is the torque of the output shaft when current is supplied to the motor 43. The drive torque of the motor 43 can be greater than the weight of the display and fixing force (the force between the guide 39 and fixing members 35). The deceleration gear has restrictive torque and it doesn't drive when a torque smaller than the restrictive torque is applied through the shaft.

The motor 43 can be DC motor or AC motor can provide the swivel hinge 45 a turning effect.

The swivel hinge 45 comprises a first rotation part 51 inserted and fixed to the insertion hole 32 of the stand 31 and a second rotation part 53 joined to the shaft and connected to the first rotation part 51 slidably. The first rotation part 51 is fixed to the stand 31 and the second rotation part 53 is fixed to the shaft 44. Between the first rotation part 51 and the second rotation part 53, there is a friction part 55 by which the restrictive torque of swivel hinge 45 is applied. Consequently, when a torque smaller than restrictive torque is applied to the swivel hinge 45, the first rotation part 51 doesn't rotate relatively to the second rotation part 53.

The restrictive torque of the swivel hinge 45 is greater than the weight of the display and fixing force (fixing force between the guide 39 and the fixing members 35). Consequently, in accordance with the rotation apparatus of a display of one embodiment of the present invention, the one end of the output shaft 44 is constrained by the weight of the display and fixing force (fixing force between the guide 39 and fixing members 35) and the other end is constrained by the swivel hinge 45. Consequently, if current is applied to the motor 43 and the drive torque is applied to the output shaft 44, the guide and display are rotated because the restrictive torque of the swivel 45 is greater than the weight and fixing force of the display.

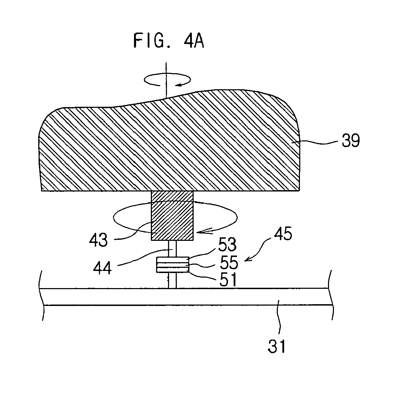

Consequently, at the time of the automatic rotation of the motor, the swivel hinge 45 is fixedly inserted into the stand 31, as illustrated in Fig.2 and Fig. 4a, configured to rotate with the motor 43, guide 39, fixing member 35 and bracket 37 as a unit. Though the motor 43 of the display rotation apparatus provide friction part 55 drive force through the shaft 44, as explained above, restrictive torque of the friction part 55 is greater than the weight of the display and fixing force, so that the first rotation part 51 and the second rotation part 53 don't rotate but the display and motor 43 are rotated relatively.

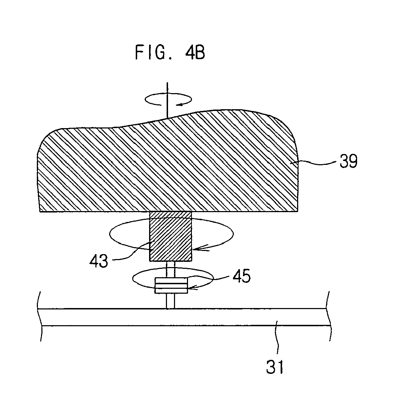

The restrictive force of the motor 43 is greater than the constraint torque of the swivel hinge 45. Consequently, if a torque greater than the constraint torque of the swivel hinge 45 and constraint force is applied to the display or guide 39, the second rotation part 53 is rotated relative to the first rotation part 51 but the deceleration gear and the rotor of the motor are not rotated. Accordingly, if a torque greater than the constraint torque of the swivel hinge 45 and constraint force is applied by the user, as illustrated in Fig. 4, the second rotation part 53, guide 39, fixing members 35, bracket 37, shaft 44 and motor 43 are rotated as a single body, but the rotor of the motor 43 and deceleration gear aren't rotated. As a consequence, in accordance of the one embodiment of the present invention, at the time of manual rotation the motor is rotated as a whole but the rotor and deceleration gear are not, so that the damage of the deceleration gear and the rotor is prevented.

The fixing members 35 penetrate through the rotation holes 33 of the stand 31 and are inserted fixedly into the lower end of the guide 39. The fixing members 35 rotate with the guide 39 and bracket 37 and are configured to support the guide 39 rotatably about the stand 31. The fixing members 35 are inserted into the rotation hole 33, as illustrated in Fig. 3, and the rotation hole 33 restrict the rotation angle of the fixing member 35.

The bracket 37 is interposed between the fixing member 35 and a lower bearing 49 and configured to support the fixing members 35. The bracket 37 is rotated with the fixing member 35. And the upper bearing 47 is interposed between the stand 31 and the guide 39. The lower bearing 49 makes the rotation of the bracket 37 smooth, and the upper bearing 47 makes the rotation of the guide 39 smooth. The upper bearing 47 and lower bearing 49 can be conventional ball bearings etc.

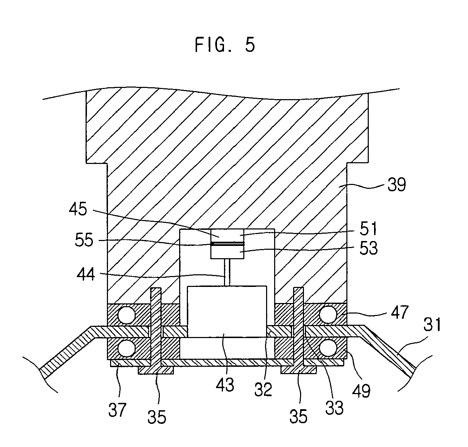

Referring to Fig. 5, display rotation apparatus according to a second embodiment of the present invention has the same or similar structure with the above embodiment except that the motor 43 is inserted into the insertion hole 32 of the stand 31 and the swivel hinge 45 is fixed to the guide 39. Accordingly, structural difference is mainly explained below.

The first rotation part 51 of the swivel hinge 45 is fixed and configured to rotate with the guide 39. The motor 43 is fixedly inserted into the insertion hole 32 of the stand 31. The motor 43 of the present embodiment is joined to the second rotation part 53 and shaft 44.

In the rotation apparatus of a display in accordance with this second embodiment of the present invention, the constraint force of the swivel hinge 45 is smaller than the constraint force of the deceleration gear and greater than the weight of the display and fixing force. Consequently, present embodiment of the rotation apparatus of a display is worked as below at the time of automatic or manual rotation.

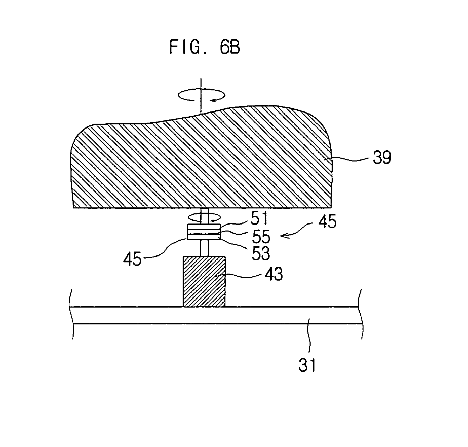

At the time of manual rotation, if a torque greater than the constraint torque of swivel hinge 45 and constraint force is applied, as illustrated in Fig. 5 and Fig. 6b, the rotor of the motor 43, deceleration gear and the second rotation part 53 are not rotated, but the first rotation part 51 is rotated with the guide 39, fixing members 35 and bracket 37. As a consequence, if the rotation apparatus of the display according to the present embodiment is rotated manually; the damage of the deceleration gear and rotor of the motor 43 can be prevented.

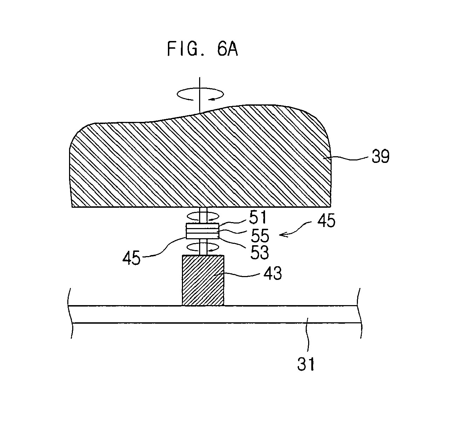

At the time of manual rotation of the rotation apparatus of a display according to the present invention, as illustrated in Fig. 6a, the swivel hinge 45, the guide 39, the fixing members, 35 and the bracket 37 are rotated simultaneously due to the operation of the motor 43. Because the weight of the display and fixing force are smaller than the constraint torque of the swivel hinge 45, the second rotation part 53 aren't rotated relative to the first rotation part 51, so that the whole swivel hinge 45 can be rotated with the guide 39.

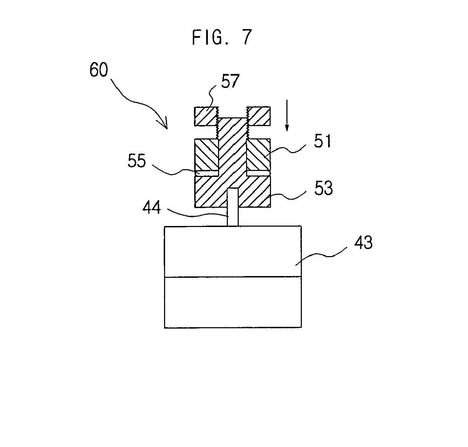

Referring to the Fig. 7, a motor assembly 60 according to the above first embodiment of the present invention comprises a first rotation part 51, a friction part 55 and a second rotation part 53. The motor assembly 60 further comprises the swivel hinge 45 configured to enable the first rotation part 51 to be rotated relative to the second rotation part 53. The motor 43 is joined with one end of the swivel hinge 45 by shaft 44 and configured to have the deceleration motor. The constraint torque of the swivel hinge 45 is smaller than the drive torque of the motor 43 and constraint force of the deceleration.

The swivel hinge 45 comprises the second rotation part 53 fixed to the shaft 44 of the motor 43 and configured to rotate with the shaft 44, and the first rotation part 51 able to rotate relatively to the second rotation part 53. The swivel hinge 45 further includes the friction part 55 interposed between the first rotation part 51 and the second rotation part 53 and configured to induce a slip of the first rotation part 51 relative to the second rotation part 53. The first rotation part 51 is pressed to the friction part 55 through the pressure part 57. The pressure part 57 is fixedly inserted into the second rotation part 53 and configured to press the first rotation part 51 to the friction part 55, so that the first rotation part 51 relative to the second rotation part 53 when a slip is occurred in the friction part 55.

While the present invention has been described with reference to particular embodiments, it is to be appreciated that various changes and modifications may be made by those skilled in the art without departing from the scope of the present invention, as defined by the appended claims and their equivalents.

## Claims

1. A display rotation apparatus, the rotation apparatus comprising:
a stand;
a swivel hinge having one end fixed to the stand and configured to rotate relatively when a predetermined amount of torque is applied;
a motor joined to the other end of the swivel hinge by a shaft and having a deceleration gear; and
a guide configured to rotate as a single body with the motor and joined to a display,
wherein the restrictive torque of the swivel hinge is smaller than the constraint force of the deceleration gear and greater than the weight of the display.

2. A display rotation apparatus according to Claim 1, wherein
the swivel hinge has a first rotation part and a second rotation part configured to rotate relatively and a friction part interposed between the first rotation part and the second rotation part,
the stand has an insertion hole into which the first rotation part is inserted and fixed, and
the shaft is connected to the second rotation part.

3. A display rotation apparatus according to Claim 2, wherein
the stand has a rotation hole having a rotation angle in the centre of the insertion hole, and
a fixing member is inserted into the rotation hole and fixed to the guide.

4. A display rotation apparatus according to Claim 1, wherein a bearing is interposed between the guide and the stand.

5. A display rotation apparatus according to Claim 3,
a bearing is interposed between the stand and the fixing member.

6. A display rotation apparatus of a display comprising:
a stand;
a motor having one end fixed to the stand and having a deceleration gear;
a swivel hinge joined to the shaft of the motor and configured to rotate relatively when a predetermined amount of torque is applied; and
a guide joined to the swivel hinge and configured to rotate simultaneously with a display,
wherein the restrictive torque of the swivel hinge is smaller than the constraint force of the deceleration gear and greater than the weight of the display.

7. A display rotation apparatus according to claim 6, wherein
the guide has a fixing groove into which the swivel hinge is inserted and fixed, and the stand has a motor fixing groove into which the motor is inserted and fixed.

8. A display rotation apparatus according to Claim 7, wherein
the stand has a rotation hole having a rotation angle in the center of the insertion hole; and
a fixing member is inserted into the rotational hole and fixed to the guide.

9. A display rotation apparatus according to Claim 6, wherein
a bearing is interposed between the guide and the stand.

10. A display rotation apparatus according to Claim 6, wherein
a bearing is interposed between the stand and the fixing member.

11. A motor assembly comprising:
a swivel hinge configured to rotate relatively when a predetermined amount of torque is applied; and
a motor joined with one end of the swivel hinge by a shaft and having a deceleration gear;
wherein the restrictive torque of the swivel hinges is smaller than the constraint force of the deceleration gear.

12. A motor assembly according to Claim 11, wherein
the swivel hinge has a first rotational part fixed to the axis of the deceleration gear and configured to rotate simultaneously, a second rotation part inserted rotatably into the first rotation part, a friction part interposed between the first rotation part and the second rotation part, and a pressure part inserted into the first rotation part inserted into the first rotation part and configured to press the second rotation part toward the friction part.
